# EUROPEAN PATENT APPLICATION

(11) **EP 1 127 623 A1**
(43) Date of publication of application: **29.08.2001**
(21) Application number: 99951194.2
(22) Date of filing: 01.11.1999
(51) Int. Cl.: B03C 7/02, B03C 7/06, B29B 17/00

(54) **PLASTIC SEPARATOR**

(30) Priority: 05.11.1998 JP 31383098; 08.06.1999 JP 16029799
(71) Applicant: Hitachi Zosen Corporation, Osaka-shi, Osaka 559-0034 (JP)
(72) Inventor: MAEHATA, Hidehiko, Hitachi Zosen Corporation, Suminoe-ku, Osaka-shi, Osaka 559-0034 (JP); INOUE, Tetsuya, Hitachi Zosen Corporation, Suminoe-ku, Osaka-shi, Osaka 559-0034 (JP); TSUKAHARA, Masanori, Hitachi Zosen Corporation, Suminoe-ku, Osaka-shi, Osaka559-0034 (JP); DAIKU, Hiroyuki, Hitachi Zosen Corporation, Suminoe-ku, Osaka-shi, Osaka 559-0034 (JP)
(74) Representative: Vonnemann, Gerhard, Dr.-Ing.
(86) International application number: JP9906087
(87) International publication number: WO0027534

(57) **Abstract**

A voltage Vp (kV) to be applied between separation electrodes and a distance L (cm) between separation electrodes are set so as to satisfy a relationship of Vp/L ≦10. Thus, separation of plastic pieces (3, 3') can correctly be carried out with high accuracy without degrading separating performance even if sparking (10) occurs between the electrodes, i.e., between an electrode drum (1) and an electrode plate (2).

## Description

### TECHNICAL FIELD

The present invention relates to a plastic separator for separating crushed plastic pieces according to kind of plastic.

### BACKGROUND ART

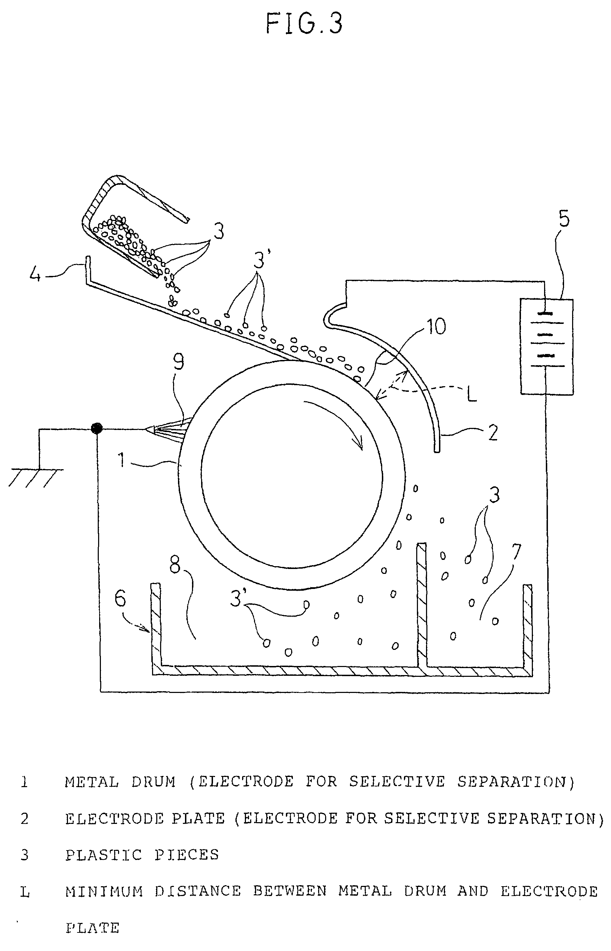

An exemplary plastic separator for separating crushed plastic pieces according to the kind of plastic is shown in Fig. 3.

The plastic separator includes a metal electrode drum 1 rotatable about a horizontal axis, an arcuate electrode plate 2 disposed diagonally above the electrode drum 1 in an opposed relation with a predetermined spacing therebetween, and a feed tray 4 for feeding plural kinds of electrically charged plastic pieces 3, 3' onto the rotating electrode drum 1.

A high voltage is applied between the electrode drum 1 and the electrode plate 2 by a high voltage direct current source 5. For example, the electrode drum 1 has a positive polarity, while the electrode plate 2 has a negative polarity.

A container 6 for receiving the separated plastic pieces 3, 3' is provided below the electrode drum 1, and includes a first collecting chamber 7 and a second collecting chamber 8 provided in an adjoining relation. A metal brush 9 is kept in contact with an outer circumferential surface of the metal drum 1, and connected to a positive electrode of the high voltage direct current source 5.

In the plastic separator having the aforesaid construction, the plural kinds of plastic pieces 3, 3' in a mixed state are agitated to be triboelectrically charged by a triboelectric charger (not shown) so as to be imparted with different amounts of charges having different polarities depending on the kind of plastic. In turn, the plastic pieces 3, 3' are fed onto the outer circumferential surface of the rotating electrode drum 1 from the feed tray 4, and allowed to pass through a space between the electrode drum 1 and the electrode plate 2.

At this time, the plastic pieces 3 positively charged fall through a path closer to the electrode plate 2 thereby to be collected in the first collecting chamber 7. The plastic pieces 3' negatively charged are attracted to the outer circumferential surface of the electrode drum 1, and allowed to fall by the rotation of the electrode drum 1 thereby to be collected in the second collecting chamber 8.

Thus, the different kinds of plastic pieces 3 and 3' are electrostatically separated and collected in the first collecting chamber 7 and the second collecting chamber 8, respectively.

In the aforesaid prior art plastic separator, sparking 10 may occur between the electrode drum 1 and the electrode plate 2 depending on the inter-electrode voltage applied between the electrode drum 1 and the electrode plate 2.

If the sparking 10 frequently occurs, an inter-electrode potential between the electrode drum 1 and the electrode plate 2 becomes zero, so that no electrostatic field is generated. This tends to degrade the separating performance when the plastic pieces 3, 3' pass through the space between the electrode drum 1 and the electrode plate 2.

It is therefore an object of the present invention to provide a plastic separator which can solve the aforesaid problem.

### DISCLOSURE OF THE INVENTION

In accordance with the present invention, there is provided a plastic separator which is adapted to electrostatically separate charged plastic pieces on the basis of polarities and amounts of charges imparted to the plastic pieces according to the kind of plastic by passing the charged plastic pieces through a space between separation electrodes between which a predetermined voltage is applied, wherein the voltage Vp (kV) applied between the separation electrodes and a distance L (cm) between the separation electrodes are set so as to satisfy a relationship of Vp/L≦10.

In the present invention, the voltage Vp (kV) applied between the separation electrodes and the distance L (cm) between the separation electrodes are set so as to satisfy the relationship of Vp/L≦10. Therefore, even if sparking occurs between the separation electrodes, the electrostatic separation of the plastic pieces is not affected by the amount of the sparking. Accordingly, the separation of the plastic pieces can be carried out with high accuracy without degrading the separating performance.

### BRIEF DESCRIPTION OF THE DRAWINGS

Fig. 1 is a graph illustrating a relationship between Vp/L and frequency of sparking in a plastic separator according to an embodiment of the present invention;
Fig. 2 is a graph illustrating a relationship between Vp/L and recovery rate and purity of plastic pieces; and
Fig. 3 is a diagram illustrating an overall construction of the plastic separator.

### BEST MODE FOR CARRYING OUT THE INVENTION

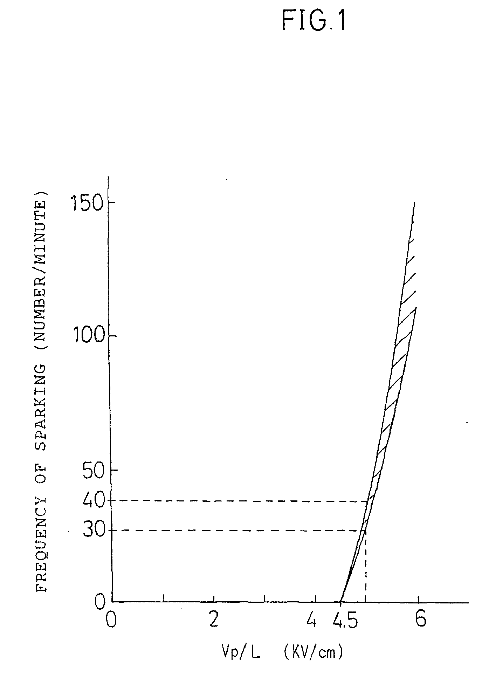

The present invention will be described in detail with reference to Figs. 1 to 3 attached hereto.

A plastic separator according to an embodiment of the present invention is adapted to separate a plurality of different kinds of plastic pieces 3, 3' according to the kind of plastic on the basis of polarities and amounts of charges imparted to the different kinds of plastic pieces when the plastic pieces are brought into friction, i.e., by utilizing triboelectric series.

The plastic separator includes: a selection electrode of a metal, i.e., an electrode drum 1, which is rotatable about a horizontal axis in a predetermined direction; an arcuate selection electrode, i.e., an electrode plate 2, which is disposed diagonally above the electrode drum 1 in an opposed relation with a predetermined spacing therebetween; a feed tray 4 for feeding the plural kinds of plastic pieces 3, 3' triboelectrically charged by a triboelectric charger onto the rotating electrode drum 1; and a container 6 disposed below the electrode drum 1 for receiving the plastic pieces 3, 3' electrostatically separated on the basis of the triboelectric series.

A high voltage is applied between the electrode drum 1 and the electrode plate 2 by a high voltage direct current source 5. For example, the electrode drum 1 has a positive polarity, while the electrode plate 2 has a negative polarity.

The container 6 includes a first collecting chamber 7 and a second collecting chamber 8 provided in an adjoining relation.

A metal brush 9 is kept in contact with an outer circumferential surface of the metal drum 1, and connected to a positive electrode of the high voltage direct current source 5.

In the plastic separator having the aforesaid construction, the plurality of different kinds of plastic pieces 3, 3' are triboelectrically charged by the triboelectric charger so as to be imparted with different amounts of charges having different polarities depending on the kind of plastic according to the triboelectric series.

After the plastic pieces are thus imparted with the different amounts of charges having the different polarities depending on the kind of plastic, the plastic pieces 3, 3' are fed onto the electrode drum 1 from the feed tray 4. Then, the plastic pieces 3, 3' pass through a space between the electrode drum 1 and the electrode plate 2. The plastic pieces 3 positively charged fall through a path closer to the electrode plate 2 thereby to be collected in the first collecting chamber 7. The plastic pieces 3' negatively charged fall through a path closer to the electrode drum 1 into the second collecting chamber 8 , or are electrostatically attracted onto the electrode drum 1 to be carried by the rotation of the electrode drum 1 and then fall into the second collecting chamber 8 or are scraped down by the metal brush 9 into the second collecting chamber 8. Thus, the separation of the plastic pieces 3, 3' is achieved.

The plastic pieces 3 are, for example, of vinyl chloride, and the plastic pieces 3' are, for example, of polyethylene.

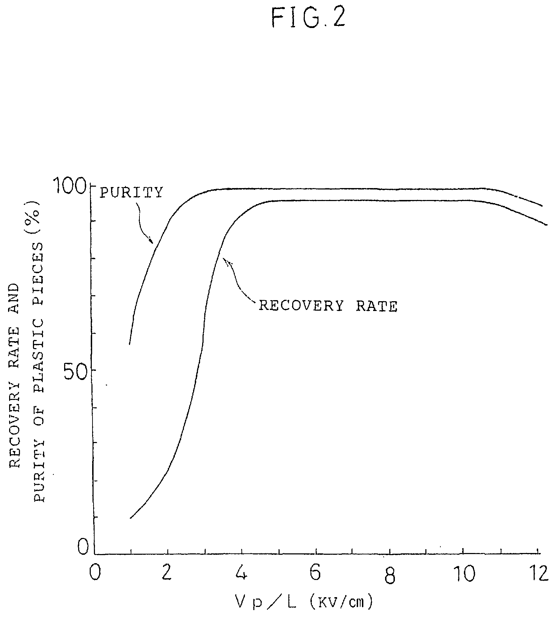

Where the inter-electrode voltage to be applied between the electrode drum 1 and the electrode plate 2 by the high voltage direct current source 5 is defined as Vp (kV) and a distance (minimum distance) between the electrode drum 1 and the electrode plate 2, i.e., between the selection electrodes, is defined as L (cm), the recovery rate and purity of the plastic pieces 3, 3' are plotted with respect to Vp/L (kV/cm) as shown in a graph of Fig. 2.

The recovery rate is herein defined as a percentage at which the plastic pieces 3 or 3' are collected in the first collecting chamber 7 or the second collecting chamber 8. Particularly in this embodiment, the recovery rate means the percentage at which the plastic pieces 3' are collected in the second collecting chamber 7.

The purity is herein defined as a ratio of the amount of the plastic pieces 3 collected in the first collecting chamber 7 to the total amount of the plastic pieces 3, 3' mixedly collected in the chamber 7, or as a ratio of the amount of the plastic pieces 3' collected in the second collecting chamber 8 to the total amount of the plastic pieces 3, 3' mixedly collected in the chamber 8. Particularly in this embodiment, the purity means the ratio of the amount of the plastic pieces 3' collected in the second collecting chamber 8 to the total amount of the plastic pieces 3, 3' mixedly collected in the chamber 8.

As can be seen from Fig. 2, the recovery rate and the purity are each improved with an increase in Vp/L value until the Vp/L value reaches a certain level, and then kept substantially constant until the Vp/L value reaches 10. The reason why the recovery rate and the purity are kept substantially constant until the Vp/L value reaches 10 is as follows.

As shown in Fig. 1, sparking occurs between the electrode drum 1 and the electrode plate 2 when the Vp/L value is 4.5 or greater. The frequency of the sparking (the number of times of sparking) increases as the Vp/L value is closer to 10 in the range of 4.5≦Vp/L≦10.

However, it has been experimentally confirmed that the amount of the sparking does not affect the electrostatic separation of the plastic pieces 3, 3' when Vp/L≦10 is satisfied. Therefore, the recovery rate and purity of the plastic pieces 3, 3' are kept substantially constant as shown in the figure when the Vp/L value is in the range of 4.5≦Vp/L≦10.

When the Vp/L value exceeds 10, however, the purity and the recovery rate start reducing. The reason why the purity and the recovery rate thus start reducing when the Vp/L value exceeds 10 is as follows. It has been experimentally confirmed that the sparking occurs between the electrode drum 1 and the electrode plate 2 at a high frequency even if the plastic pieces 3, 3' do not pass through the space between the electrode drum 1 and the electrode plate 2 and, hence, the potential between the electrode drum 1 and the electrode plate 2 becomes zero to extend a period during which the electrostatic field is not generated.

It is therefore desired to set the Vp/L value at a level which ensures a proper recovery rate and purity of the plastic pieces 3, 3' while satisfying Vp/L≦10. It has been experimentally confirmed that, if the Vp/L value is too small, the recovery rate and purity of the plastic pieces 3, 3' are reduced.

It has been experimentally confirmed that, where the plastic pieces 3' are to be recovered from the plastic pieces 3, 3', for example, the purity of the plastic pieces 3' can be maintained at not lower than 50 % when the Vp/L value is within the range of 1≦Vp/L≦10. Further, it has been experimentally confirmed that the plastic pieces 3' can be obtained with a purity of not lower than 90% when the Vp/L value is within the range of 2≦Vp/L≦10, and the plastic pieces 3' can be obtained with a purity of 90% and at a recovery rate of 90% when the Vp/L value is within the range of 3.5≦Vp/L≦10. When the L value is set to be not smaller than twice the grain diameter of the plastic pieces 3, 3', the plastic pieces 3, 3' are allowed to smoothly fall through the space between the electrode drum 1 and the electrode plate 2.

Particularly where the Vp/L value is set so as to satisfy Vp/L≦4.5, the sparking between the electrode drum 1 and the electrode plate 2 can be prevented. Even if the plastic pieces 3, 3' include plastic pieces having diameters of 100 *µ*m or smaller, ignition of the plastic pieces 3, 3' and explosion of the plastic pieces 3, 3' can be prevented. Therefore, the separation of the plastic pieces 3, 3' can be carried out in a safe environment.

An exemplary case is herein described in which plastic pieces 3, 3' of polyethylene and polypropylene were separated under the following conditions: an inter-electrode voltage Vp of 20 (kV) was applied between the electrode drum 1 and the electrode plate 2; and the electrode drum 1 and the electrode plate 2 were spaced by a minimum distance L of 5 (cm). Under the aforesaid conditions, the Vp/L value is Vp/L=20/5=4≦4.5. In this experiment, the sparking 10 and the explosion of the plastic pieces 3, 3' were prevented, so that the separation of the plastic pieces 3, 3' was carried out in a safe environment.

As described above, the separation of the plastic pieces 3, 3' can correctly be carried out with high accuracy without degrading the separating performance by setting the Vp/L value at a level which ensures a required recovery rate and purity of the plastic pieces 3, 3' while satisfying Vp/L≦10 so that the electrostatic separation of the plastic pieces 3, 3' is not affected by the sparking 10 occurring between the electrode drum 1 and the electrode plate 2.

Although the aforesaid embodiment is arranged such that the electrode drum 1 has a positive polarity and the electrode plate.2 has a negative polarity, the electrode drum 1 and the electrode plate 2 may of course be adapted to be imparted with a negative polarity and a positive polarity, respectively, for separating plastic pieces 3, 3' of the same kinds as those employed in the aforesaid embodiment, or for separating plastic pieces 3, 3' of different kinds from those employed in the aforesaid embodiment by triboelectrically charging the plastic pieces 3, 3' on the basis of the triboelectric series by means of the triboelectric charger.

### INDUSTRIAL APPLICABILITY

As described above, the plastic separator according to the present invention is suitable for separating plural kinds of plastic pieces in a mixed state according to the kind of plastic.

## Claims

1. A plastic separator which is adapted to impart a plurality of different kinds of plastic pieces with different amounts of charges having different polarities depending on the kind of plastic by bringing the plastic pieces into friction, and electrostatically separate the plastic pieces according to the kind of plastic on the basis of the polarities and amounts of the charges imparted to the plastic pieces by passing the plastic pieces through a space between separation electrodes between which a predetermined voltage is applied, wherein the voltage Vp (kV) applied between the separation electrodes and a distance L (cm) between the separation electrodes are set so as to satisfy a relationship of Vp/L≦10.
